# EUROPEAN PATENT SPECIFICATION

(11) **EP 1 694 749 B1**
(45) Date of publication and mention of the grant of the patent: **06.08.2008**
(21) Application number: 04795180.1
(22) Date of filing: 13.10.2004
(51) Int. Cl.: C08J 5/18, C08L 23/00, C08L 51/06

(54) **LIQUID TRANSPORT FILM**
FLÜSSIGKEITSTRANSPORTFILM
FILM POUR TRANSPORTER UN LIQUIDE

(30) Priority: 28.10.2003 JP 2003367658
(43) Date of publication of application: 30.08.2006
(73) Proprietor: 3M Innovative Properties Company, St. Paul MN 55133-3427 (US)
(72) Inventor: TORIUMI, N., Sumitomo 3M Limited, Sagamihara, Kanagawa 229-1185 (JP); KOORIYAMA, A., Sumitomo 3M Limited, Sagamihara, Kanagawa 229-1185 (JP); SUWA, T., Sumitomo 3M Limited, Sagamihara, Kanagawa 229-1185 (JP); HATTORI, J., Sumitomo 3M Limited, Sagamihara, Kanagawa 229-1185 (JP)
(74) Representative: Voortmans, Gilbert J.L.
(86) International application number: PCT/US2004/033983
(87) International publication number: WO 2005/044903

(56) References cited:
- WO-A-98/05706
- WO-A1-00/42958
- US-A1- 2003 102 076
- US-B1- 6 303 713

## Description

### FIELD

The present invention relates to a Liquid transport film useful to transport a liquid while controling the flow direction of the liquid,

### BACKGROUND

Liquid transport films are useful for the transport of various liquids such as blood, urine, alcohol, water and ink. Liquid transport films are known to be used in a variety of applications including medical applications (such as surgical procedures, dental, treatments and specimens tests), food tray applications, diapers, inkjet printer heads and the Like (see, for example, Japanese Kohyo Nos. 2002-535039 and 2002 518103).

In these liquid transport films, a plurality of grooves capable of spontaneously transporting a liquid in the axial direction are provided. Liquid is transported from one site to another site along the grooves. Conventional liquid transport films have been mainly formed of a material obtained by mixing (e.g., kneading) a surfactant into polyethylene. The polyethylene is excellent in its resistance against chemicals and water, inexpensive, flexible, highly moldable and therefore, useful as a substrate for a liquid transport film. The surfactant enhances the surface energy on the polyethylene film surface particularly for enabling the transport of highly polar liquids.

The primary properties required of a liquid transport film are a high initial liquid transporting ability and a capability of maintaining the transporting ability overtime in both use and/or storage. Conventional liquid transport films formed by mixing a surfactant into a polymer can exhibit the desired initial liquid transport characteristics. However, over time, especially when used continuously or when continuously contacted with a liquid, such as water, the transport characteristics of the film are decreased. This is particularly the case when the liquid is highly polar. This is believed to occur because the surfactant is merely mixed in and does not form a firm bond (for example, a covalent bond) with the polyethylene substrate. When continuously used or continuously contacted with a liquid, the surfactant gradually migrates out of the substrate.

In order to solve this problem, Japanese Kohyo 2002-535039 discloses a method of increasing the amount of surfactant used and a method of using a surfactant having a polyfunctional alkoxy group, which is hardened by moisture and thereby fixed. However, in the former method, the problem is not substantially solved and in the latter method, the hardening by moisture is difficult to control and the means for confirming the completion of reaction is limited.

Furthermore, Japanese Kohyo 2002-535039 and 2002-518103 describe various methods for producing a polyolefin-base liquid transport film by using a substance other than a surfactant. One of these methods is to surface coat the substrate with a hydrophilic polymer. In particular, use of radiation graft polymerization is deemed to be promising. The radiation graft polymerization is a technique of irradiating the surface of the substrate to generate a radical thereon and the grafting the hydrophilic polymer to the film surface by the reaction of the radical with the hydrophilic monomer. When the conditions are precisely controlled, a hydrophilic coating can be uniformly provided only in the vicinity of surface without filling fine grooves provided for transporting a liquid. In addition, the hydrophilic monomer is bonded to the substrate by a graft reaction and therefore, its properties are expected to be maintained in various storage or use environments.

Japanese Kohyo 2002-535039 states that a conventional method can be used for the grafting step. However, when grafted by a conventional method, the properties required of a liquid transport film, particularly high transport speed for a highly polar liquid, cannot be satisfactorily achieved.

### BRIEF DESCRIPTION OF THE DRAWINGS

Fig. 1 is a cross-sectional view of one embodiment of the invention.
Fig. 2 is a cross-sectional view of a second embodiment of the invention.
Fig. 3 is a cross-sectional view of a third embodiment of the invention.
Fig. 4 is a cross-sectional view of a fourth embodiment of the invention.

### DETAILED DESCRIPTION

The present invention provides an improved liquid transport film capable of maintaining high transport characteristics particularly for highly polar liquids not only initially but over an extended period of time.

The present invention provides a polyolefin-base liquid transport film having on the surface thereof a plurality of fine grooves, wherein a hydrophilic monomer is grafted to the surface of the fine grooves by radiation graft polymerization to form a graft layer and the hydrophilic monomer is an N,N-dialkylaminoalkyl (meth)acrylamide and/or a salt thereof.

in the liquid transport film of the present invention, a hydrophilic monomer is graft polymerized to the surface of a plurality of fine grooves provided on the surface of a hydrophobic polyolefin substrate, The resulting graft layer is preferably firmly bonded to the substrate and provides a hydrophilic coating thereon, so that the liquid transport film has a high liquid transporting ability.

The liquid transport film of the present invention is obtained by providing a plurality of fine grooves on the surface of a polyolefin substrate and grafting a hydrophilic monomer to the surface of the grooves to form a graft layer. The polyolefin constituting the substrate is preferably high in its resistance to chemicals and water, inexpensive, flexible, excellent in its moldability and therefore.

Examples of useful polyolefins include polyethylene, polypropylene, a propyleneethylene copolymer, polybutene and polymethylpentene-1, Among these, polyethylene is preferred because the fine grooves have sufficiently high mechanical strength and heat resistance imparted to them simultaneously when the surface treatment is crosslinked of improving the flexibility, adhesive property,

The polyolefin used as the substrate may be a copolymer of ethylene or propylene and another monomer such as a hydrophilic monomer such as carboxylic acid, hydroxyl group or amino group, an acrylic acid ester. Such comonomers are often used for specific purposes such as improving the flexibility, adhesion, and/or other physical properties of the substrate. The amount of such comonomer used may be may be varied to achieve the desired goals but should not affect the properties of the liquid transport film. Furthermore, the polyolefin may contain an antioxidant, various stabilizers, a processing aid, and a low molecular weight compound such as lubricant, pigment and sensitizer for enhancing the internal crosslinking. On considering the use environment of liquid transport film or the production method of liquid transport film by using a radical, the amount of such an additive should be suppressed to the minimum.

The plurality of fine grooves provided on the substrate are formed by molding or embossing. This groove may have any shape as long as a liquid can be transported along the axial direction of the groove. For example, the groove may have a V-shaped cross section, a rectangular cross section or a combination thereof or may have a term where a second groove is included in a first groove.

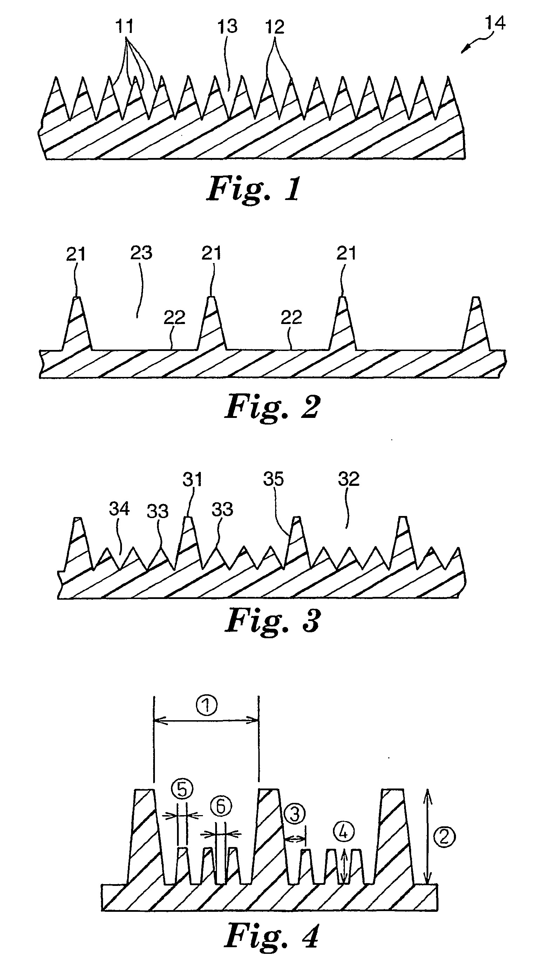

The shape or groove is described by referring to the drawings. As shown in Fig.1. grooves 13 can be formed on a polyolefin substrate 14 by a series of V-shaped side walls 11 and tips 12. Also, as shown in Fig. 2, grooves 23 may be formed by providing a wide and flat trough 22 between slightly flattened tips 21. The depth (namely, the distance from tip to bottom) of groove is generally from 5 to 3,000 µm, preferably from 100 to 1,000 µm.

In Fig. 3, a wide first groove 32 is formed between tips 31, the space between the side wall 35 and the side wall 35 of the first groove 32 is not a flat surface, a plurality of low tips 33 are provided between tips 31, and a second groove 34 is formed between the low tips 33.

In the thus-formed fine groove, the maximum width of the first groove 31 is generally less than 2,000 µm, preferably less than 1,500 µm. The depth of the first groove is generally from 50 to 3,000 µm, preferably from 100 to 1,000 µm. The depth of the second groove is preferably from 5 to 50% of the depth of the first groove. The groove may have a shape other than those shown in Figs. 1 to 3. Also, the groove may be varied in the cross-sectional width along the axial direction of the groove or the side wall of the groove may not be linear in the axial direction but may be curved.

In the liquid transport film of the present invention, a hydrophilic monomer is grafted to the surface of those fine grooves by radiation graft polymerization to form a graft layer and thereby the surface is rendered hydrophilic. The term "hydrophilic" as used herein means that the contact angle is less than 90°. The radiation graft polymerization is effective particularly in maintaining the liquid transport characteristics for a solution having high polarity. Furthermore, by using a technique such as masking at the irradiation of radiation, the graft reaction can be patternwise controlled and the transport paths in the liquid transport film may be provided like a circuit. Particularly, internal crosslinking proceeds in the polyethylene as described above and this is effective also in enhancing the heat resistance.

As the radiation graft polymerization, the so-called pre-irradiation method and simultaneous irradiation method are known. In the pre-irradiation method, an object is previously irradiated and then dipped in a monomer to allow the graft polymerization to proceed. In the simultaneous irradiation method, an object is irradiated after coating a monomer onto the surface or during dipping in a monomer. In the present invention, either method can be applied. Whichever method is employed, the conditions must be set to prevent the graft reaction from excessively proceeding to fill fine grooves on the surface by the homopolymerization.

As for the type of radiation, an ultraviolet ray or a y ray radiation may be used. However electron beam radiation is preferred. The acceleration voltage is suitably from 10 to 500 kV, though this varies depending on the selection of pre-irradiation or simultaneous irradiation or the purpose such as investiture of heat resistance to the internal layer. The irradiation dose is preferably from 1 to 500 kGy, more preferably from 5 to 350 kGy, and the irradiation atmosphere is preferably an inert gas atmosphere such as nitrogen. In the pre-irradiation, the film is preferably dipped in a monomer solution immediately after the irradiation, because deactivation and stabilization of the radical by oxygen in air is considered to start immediately after the reaction. In the case where dipping immediately after irradiation is difficult, the film needs to be treated and then cooled in an inert gas atmosphere.

The liquid transfer film of the present invention is characterized in that the hydrophilic monomer grafted to the groove surface is an N,N-dialkylaminoalkyl acrylamide, an N,N-dialkylaminoalkyl methacrylamide (these are collectively called an N,N-dialkylaminoalkyl (meth)acrylamide), or a salt thereof. As the method for hydrophilizing a hydrophobic substrate, radiation graft polymerization using various hydrophilic monomers such as acrylic acid or hydroxymethyl methacrylate is generally known. However, in the case of a liquid transport film, hydrophilization by using a conventionally employed hydrophilic monomer is found to be insufficient for the transport of particularly a liquid having high polarity. On the other hand, the N,N-dialkylaminoalkyl (meth)acrylamide grafted to a polyolefm film having fine grooves can maintain high transport characteristics for a liquid having high polarity not only at the initial stage but also in the use environment. The reason therefor is considered because the N,N-dialkylaminoalkyl (meth)acrylamide is less subject to the polymerization inhibition by oxygen than other monomers and therefore, the graft reaction activity is high, or the N,N-dialkylaminoalkyl (meth)acrylamide has two hydrophilic functional groups and therefore, higher hydrophilicity can be obtained.

In addition, the N,N-dialkylaminoalkyl (meth)acrylamide has a high basicity and an adsorption activity and therefore, can adsorb an acidic medium or effectively neutralize an acidic solution, if desired. When an adsorptive dye is used, the transport process can be visually confirmed also after the volarisation of liquid. Furthermore, the N,N-dialkylaminoalkyl (meth)acrylamide has high hydrolysis resistance and exhibits high transporting ability even after the dipping in an acidic solution or basic solution.

Preferred examples of the N,N-dialkylaminoalkyl (meth)acrylamide include those where the alkyl moiety is methyl, ethyl or propyl. Among these, N,N-dimethylaminopropyl acrylamide is more preferred. Examples of the salt of N,N~ dialkylaminoalkyl (meth)acrylamide include a quaternary salt with methyl chloride, and specific examples thereof include methyl chloride quaternary salt of N,N-dimethylaminopropyl acrylamide. The N,N-dialkylaminoalkyl (meth)acrylamide may be mixed with other monomers within the range of not impairing the properties of the liquid transport film of the present invention.

The N,N-diakylaminoalkyl (meth)acrylamide may be graced to the groove surface by bringing an N,N-dialkylaminoalkyl (meth)acrylamide solution into contact with the polyolefin substrate having fine grooves before or after the irradiation of radiation. The wettability of N,N-dialkylaminoalkyl(meth)acrylamide to the polyolefin surface is not so important and the N,N-dialkylaminoalkyl (meth)acrylamide may be contacted as a simple substance or may be contacted after diluting it with a solvent, water.

The thickness of the graft layer a preferably one that does not change the fine structure provided in the polyolefin substrate. The thickness varies depending on the shape of fine groove. For example, in a liquid transport film having a shape described in Examples below, the thickness of the graft layer is usually from 0.01 to 5 µm, suitably from 0.05 to 1 µm.

In the case of grafting by the simultaneous irradiation method, the coating thickness needs to be controlled by the radiation source or conditions for irradiation. In either pre-irradiation or simultaneous irradiation, a sulfate may be added to the solution of N,N-dialkylaminoalkyl (meth)acrylamide so as to prevent homopolymerization. In the solution of N,N-dialkylaminoalkyl (meth)acrylamide, a polymerization inhibitor or a stabilizer is preferably removed or reduced within the range of not impairing the handling stability. Furthermore,the concentration of dissolved oxygen is preferably reduced by previously blowing a large amount of inert gas or applying a pressure reduction treatment. Also, during the dipping, the diffusion of oxygen is preferably prevented by superposing the films one on another or blowing an inert gas. After the contact, the film is suitably dipped for 30 minutes to 5 hours at room temperature so as to sufficiently perform the graft reaction, but by elevating the solution temperature to 30 to 50°C, the reaction time can be shortened because a radical generated inside the polyolefin can be utilized.

After the predetermined graft reaction is thus performed, the excess monomer solution is washed with a solvent or water and then the film is dried, whereby the liquid transport film of the present invention is obtained. This liquid transport film may be used in the form of a single layer or may be used by superposing a plurality of films.

### EXAMPLES

The present invention is further described in the following Examples.

### Production of Liquid Transfer Film

A polyethylene (PETROTHENE 208, produced by Tosoh Corporation) was ejection-molded at 150°C by using a mold to produce a film having a shape shown in Fig. 4. The dimension of each film was Form 2 in Table 1 below. The thickness of the film as a whole was from 500 to 1,000 µm. On the film, an electron beam of 150 kGy was irradiated from the shaped face side by using an electron beam irradiating apparatus (manufactured by ESI) at 200 kV. Immediately after the irradiation, the film was dipped in N,N-dimethylaminopropyl acrylamide (DMAPAA) and left standing at room temperature for 2 hours. Thereafter, excess DMAPAA was washed with methanol and methyl ethyl ketone and then the film was dried (Examples 1 to 5). Also, a film was produced in the same manner as above, irradiated with an electron beam in the same manner except for providing a 1 cm-width non-irradiated area at one end of the film, and dipped in DMAPAA to obtain a liquid transport film (Example 6).

Liquid transport films (Comparative Examples 6 to 8) were obtained in the same manner as in Examples 1 to 5 except for using 2-hydroxyethyl methacrylate (HEMA) in place of DMAPAA. Here, the dipping time was varied, that is 2 hours (Comparative Example 6), 3 hours (Comparative Example 7) or 4 hours (Comparative Example 8).

Furthermore, a nonionic surfactant (TRITON X-35, produced by Roam & Haas) was melt-blended to have a concentration of 1 wt% based on the polyethylene (Tenite 18BOA, produced by Eastman) and a film was produced to have a shape of Fig. 4 (dimension was Form 1 in Table 1) and an entire thickness of 200 to 300 µm (Comparative Examples 1 to 5).

**Table 1**

| Table 1: Dimension of Each Part [µm] | | | | | | |
|---|---|---|---|---|---|---|
| | 1 | 2 | 3 | 4 | 5 | 6 |
| Form 1 | 217 | 167 | 50 | 36 | 22 | 14 |
| Form 2 | 261 | 183 | 50 | 36 | 22 | 14 |

### Evaluation of Liquid Transport Characteristics

The liquid transport film obtained above was cut into test pieces of 25 cm in the groove direction and 2 cm in the direction perpendicular to groove. On the lower portion of this test piece, a marked line as a starting point was drawn in the direction perpendicular to groove while not scratching the groove. Also, a marked line for the measurement of speed was drawn at the position of 5 cm from the starting point in the groove direction. This test piece was vertically sunk in a vessel filled with distilled water and the portion up to the starting point was dipped in the distilled water. Starting from this time, the distilled water was elevated along the groove and the time necessary for the water level to go over the marked line at 5 cm was measured (initial test).

After the completion of initial test, the dried liquid transport film was exposed to 5 kinds of conditions shown in Table 2 and then, the film was dried and subjected to the same test as the initial test (environment test). Here, the acid used was an oxalate buffer solution (produced by Wako Pure Chemical Industries, Ltd.) at a pH of 1.68 and the alkali used was a carbonate buffer solution (produced by Wako Pure Chemical Industries, Ltd.) at a pH of 10.01.

**Table 2**

| Table 2: Test Results of Vertical Liquid Transport (time necessary for transport of 5 cm) | | | | | | | |
|---|---|---|---|---|---|---|---|
| | | | After Environment Test [sec] | | | | |
| | N Number | Initial [sec] | Oven at 70°C | Hot Water at 90°C | Ion Exchanged Water | Acid at Room Temperature | Alkali at Room Temperature |
| | | | after 25 days | after 25 days | after 25 days | after 25 days | after 25 days |
| Example 1 | 2 | 15 | 16 | | | | |
| Example 2 | 3 | 15 | | 8 | | | |
| Example 3 | 3 | 13 | | | 26 | | |
| Example 4 | 3 | 16 | | | | 12 | |
| Example 5 | 3 | 16 | | | | | 17 |
| Comparative Example 1 | 2 | 16 | 55 | | | | |
| Comparative Example 2 | 3 | 15 | | 132 | | | |
| Comparative Example 3 | 3 | 15 | | | 337 | | |
| Comparative Example 4 | 3 | 15 | | | | 67 | |
| Comparative Example 5 | 3 | 15 | | | | | 117 |
| Comparative Example 6 | 1 | * | - | - | - | | |
| Comparative Example 7 | 1 | 180 | - | - | - | - | - |
| Comparative Example 8 | 1 | 100 | - | - | - | - | - |

| | | | | | | | |
|---|---|---|---|---|---|---|---|
| * The distilled water could not climb 5 cm. | | | | | | | |

As seen in Table 2 above, in Examples 1 to 5, the time necessary for the transport of 5 cm at the initial state was on the same level as in Comparative Examples 1 to 5 which were a liquid transport film having kneaded therein a surfactant, and a high transport speed was exhibited. After the environment test, the time necessary for the transport of 5 cm was equal to or slightly longer than that at the initial stage in Examples 1 to 5, however, the time was greatly increased in Comparative Examples 1 to 5. In Comparative Examples 6 to 8 where HEMA was grafted, the distilled water could not climb 5 cm with a dipping time of 2 hours (Comparative Example 6). When the dipping time was elongated, the distilled water elevated at last with a dipping time of 3 hours (Comparative Example 7) but the speed was low. With a dipping time of 4 hours (Comparative Example 8), the speed was improved but the transport speed was not satisfied.

### Horizontal Transport Test

The film of Example 6 was cut into a test specimens having a dimension of 20 cm in the groove direction and 2 cm in the direction perpendicular to the groove. This test piece was placed horizontally and a few drops of an oxalate buffer solution (produced by Wako Pure Chemical Industries, Ltd,) at a pH of 1.68 were dropped on the boundary between the electron beam non-irradiated area and the irradiated area and transported along the groove on the test piece. As a result, a direction-controlled transporting performance that the oxalate solution does not flow in the non-irradiated area side but flows in the irradiated area side was confirmed. Subsequently, a pH test paper was applied at the position of 12.5 cm from the dropped portion, as a result, the pH was 7 and the neutralization activity was verified.

### Industrial Applicability

The liquid transport film of the present invention has a high liquid transporting ability for a solution having high polarity at the initial stage and in a use environment and therefore, this is effective particularly in uses where a liquid is continuously transported or uses where a liquid is discontinuously but continually and repeatedly transported. That is, the liquid transport film of the present invention can be used, in addition to conventional uses, tor the bag or inner wall of tank for ink or medical preparation, for the prevention of dewing in window or bathroom. Also, by controlling the circuit-like liquid transport or utilizing the neutralization or adsorption activity, the liquid transport film of the present invention can be used as a test film for medical uses. Furthermore, by adsorbing a microorganism- or metal-absorptive functional group or catalyst, the liquid transport film of the present invention can be used for recovery of rare metals, removal of impurities, purification of environment or production of industrial products or medical preparations.

## Claims

1. A polyolefin-base liquid transport film having on the surface thereof a plurality of fine grooves, wherein a hydrophilic monomer is grafted to the surface of the fine grooves by radiation graft polymerization to form a graft layer and the hydrophilic monomer is an N,N-dialkylaminoalkyl (meth)acrylamide and/or a salt thereof.

2. The liquid transport film according to claim 1, wherein the hydrophilic monomer is N,N-dimethylaminopropylacrylamide.

3. The liquid transport film according to claim 1, wherein the thickness of the graft layer is from 0.01 to 5 µm.

4. The liquid transport film according to claim 1, wherein the polyolefin is polyethylene.

5. The liquid transport film according to claim 1, wherein the depth of the groove is from 5 to 3,000 µm.

6. The liquid transport film according to claim 1, wherein the groove have a first groove and a second groove included in the first groove, the depth of the first groove is from 50 to 3,000 µm, and the depth of the second groove is from 5 to 50% of the depth of the second groove.

## Patentansprüche

1. Flüssigkeitstransportfilm auf Polyolefinbasis, der auf seiner Oberfläche mehrere feine Rillen trägt, wobei ein hydrophiles Monomer durch Strahlungspfropfpolymerisation auf die Oberfläche der feinen Rillen gepfropft worden ist, um eine Pfropfschicht zu bilden, und das hydrophile Monomer ein N,N-Dialkylaminoalkyl(meth)acrylamid und/oder Salz davon ist.

2. Flüssigkeitstransportfilm nach Anspruch 1, wobei das hydrophile Monomer N,N-Dimethylaminopropylacrylamid ist.

3. Flüssigkeitstransportfilm nach Anspruch 1, wobei die Dicke der Pfropfschicht 0,01 bis 5 µm beträgt.

4. Flüssigkeitstransportfilm nach Anspruch 1, wobei das Polyolefin Polyethylen ist.

5. Flüssigkeitstransportfilm nach Anspruch 1, wobei die Tiefe der Rille 5 bis 3000 µm beträgt.

6. Flüssigkeitstransportfilm nach Anspruch 1, wobei die Rille eine erste Rille und eine in der ersten Rille enthaltene zweite Rille aufweist, wobei die Tiefe der ersten Rille 50 bis 3000 µm beträgt und die Tiefe der zweiten Rille 5 bis 50 % der Tiefe der ersten Rille beträgt.

## Revendications

1. Film de transport de liquides à base de polyoléfine présentant sur sa surface une pluralité de cannelures fines, dans lequel un monomère hydrophile est greffé à la surface des cannelures fines par polymérisation par greffage sous rayonnement pour former une couche de greffage et le monomère hydrophile est un (méth)acrylamide de N,N-dialkylaminoalkyle et/ou un sel de celui-ci.

2. Film de transport de liquides selon la revendication 1, dans lequel le monomère hydrophile est l'acrylamide de N,N-diméthylaminopropyle.

3. Film de transport de liquides selon la revendication 1, dans lequel l'épaisseur de la couche de greffage est comprise entre 0,01 et 5 µm.

4. Film de transport de liquides selon la revendication 1, dans lequel la polyoléfine est le polyéthylène.

5. Film de transport de liquides selon la revendication 1, dans lequel la profondeur de la cannelure est comprise entre 5 et 3 000 µm.

6. Film de transport de liquides selon la revendication 1, dans lequel les cannelures consistent en une première cannelure et une deuxième cannelure incluse dans la première cannelure, la profondeur de la première cannelure est comprise entre 50 et 3 000 µm, et la profondeur de la deuxième cannelure est de 5 à 50% de la profondeur de la première cannelure.
